# EUROPEAN PATENT SPECIFICATION

(11) **EP 2 466 176 B1**
(45) Date of publication and mention of the grant of the patent: **02.10.2013**
(21) Application number: 10195027.7
(22) Date of filing: 14.12.2010
(51) Int. Cl.: F16K 11/20, F16K 11/24, F16K 43/00

(54) **Switch device for water conduit valve**
Schaltungsvorrichtung für Wasserleitungsventil
Dispositif de commutation pour vanne d'eau

(43) Date of publication of application: 20.06.2012
(73) Proprietor: Yuan Mei Corporation, Changhua County 505 (TW)
(72) Inventor: Cheng, Chi-Han, Changhua County 505 (TW)
(74) Representative: Lang, Christian

(56) References cited:
- EP-A2- 0 521 485
- DE-C- 339 804
- US-A- 5 497 135
- US-A1- 2002 104 563

## Description

### FIELD OF THE INVENTION

The present invention relates to a switch device for water conduit valve, and more particularly to an innovative technique, in which a valve is simultaneously provided with a magnetic control switch device and a manual control switch device between its water inflow passage and a water outflow passage, that is provided to freely select operating a switch device to introduce water flow into the water outflow passage from the water inflow passage.

### BACKGROUND OF THE INVENTION

According to a conventional structure of disposing a water inflow passage and a water outflow passage in a conventional valve body and disposing valve switches between the water inflow passage and the water outflow passage adopts a single operating manner as a main design, including a magnetic control switch and a manual control switch by searching publication literature references.

The related prior arts applies magnetic control technique in a switch device for water conduit valve, including U.S. published applications 20050184261, 20100019178, 20090224191, 20080216896, U.S. patents 7296593, 6691937, 6688577, 6675826, 6619612, 5497135, 6073904, 6076550, 7637475, 5599003, 5503362, 5269333, 5145145, 4948090, 4934651, 6457697, 5738138, 5676342, 7703740, 5655747, and 5622351, the technique features shown in the foregoing prior arts utilize a valve to partition pipes and water passages. The valve is controlled by a valve rod to show an opening or closing state. The valve rod is disposed to an end of a rod body. Another end of the rod body corresponding to the end of disposing the valve rod has a flexible element. The main functionality of the flexible element is to push the rod body to allow the valve rod to seal the valve. The rod body then is driven to displace to allow the valve rod of one end to eject from the valve. In the foregoing published, applications and patents, most structures are driven by magnetic control devices.

However, the defects commonly existing in the foregoing prior arts are that when the valve is opened, the moveable rod body moves toward a direction that is opposite to the pushing of the flexible element. A reverse damper generated by the flexible element that is compressed may cause shift phenomenon at the moving path for the rod body, resulting in non-smooth situation.

Moreover, the rod bodies utilized in the prior arts did not have magnetic function, and parts of disposing the valve are purely made of rubber. Consequently, when the valve rod disposed to an end of the rod body plugs up the valve, the pushing force generated by the flexible element is merely taken as a power source. None of any company can develop other innovate design in the present time. The conventional bottleneck needs to be break through.

Further, the related published applications and patents using manual control as the switch device for water conduit valve are frequently applied in a manual control ball valve for connecting pipes and allow the valve connected to the inside of the pipes to show opening or closing states by using manual twisting. The foregoing manual twisting is not good enough since it is merely taken as a single operating mode.

Accordingly, to overcome the foregoing shortcomings, the inventor(s) of the present invention based on years of experience in the related field to conduct extensive researches and experiments, finally invented a control switch for water conduit valve.

US 2002/014563 A1 and EP 0 521 485 A2 describe irrigation valves having a main flow channel provided with a valve and a side flow channel which can be opened and closed so as to operate the valve in order to open or close the main flow channel. DE 339 804 C1 describes a valve arrangement having two flow channels between a common inflow passage and a common outflow passage, wherein each of the flow channels is provided with a valve plug.

Starting from the state of the art it is the object of the present invention to provide a valve device the flow through which can be controlled either manually or automatically, while additionally increasing the safety conditions allowing a maximum flow only under particular conditions.

### SUMMARY OF THE INVENTION

A further objective of the present invention is to provide a control switch for water conduit valve having manual control and electromagnetic control functions to select and operate.

The above-mentioned objects are solved by the control switch for water conduit valve according to claim 1. Advantageous improvements of the present invention are described by dependent claims.

To achieve the foregoing objective, the control switch for water conduit valve provided by the invention comprises a valve body disposed with a water inlet, wherein the water inlet is bifurcated to form more than one water outflow passage, and a first water outlet and a first water inlet, and a second water outlet and a second water inlet are respectively disposed between the water inflow passage and each water outflow passage; and a first circular seat is extended from an external portion of the first water outlet, and a magnetic control switch device is connected to the first circular seat, and a first rubber ring is fit to the first water outlet and the first water inlet to cover the water outlet and the water inlet, and the first rubber ring has a piercing hole respectively located at a field of the first water outlet and a first valve located to the first water inlet to have the function of controlling the opening or closing of the first valve by regulating the magnetic control switch device; and a second circular seat is extended from an external portion of the second water outlet, and a manual control switch device is connected to the second circular seat, and a second rubber ring is fit to the second water inlet, and a second valve is axially formed at the second rubber ring to have the function of controlling the opening or closing of the second valve by regulating the manual control switch-device.

Accordingly, at least one magnetic control switch device and a manual control switch device are disposed between the water inflow passage and the same water outflow passage to provide a user to randomly select and operate.

### BRIEF DESCRIPTION OF THE DRAWINGS

FIG 1 is a decomposition drawing of a structure according to a preferred embodiment of the present invention;
FIG. 2 is a three-dimensional drawing of a valve body of a structure at an another angle according to a preferred embodiment of the present invention;
FIG. 3 is a decomposition drawing of a first rubber ring of a structure according to a preferred embodiment of the present invention;
FIG. 4 is a decomposition drawing of a magnetic control switch device of a structure according to a preferred embodiment of the present invention;
FIG. 5 is an assembled cross-sectional drawing according to FIG. 4;
FIG. 6 is a schematic diagram of a movement according to FIG. 5;
FIG. 7 is a decomposition drawing of a valve rod of a structure according to a preferred embodiment of the present invention;
FIG. 8 is a decomposition drawing of a manual control switch device of a structure according to a preferred embodiment;
FIG. 9 is an assembled cross-sectional drawing according to FIG. 8;
FIG. 10 is a schematic diagram of a movement according to FIG. 9;
FIG. 11 is a three-dimensional drawing according to FIG. 1;
FIG. 12 is a front view drawing of a hidden rotary button and an external cap according to FIG. 11;
FIG. 13 is an A-A cross-sectional drawing according to FIG. 11;
FIG. 14 is a B-B cross-sectional drawing according to FIG. 13;
FIG. 15 is a C-C cross-sectional drawing according to FIG. 13;
FIG. 16 is a movement diagram I according to FIG. 15;
FIG. 17 is a movement diagram II according to FIG. 15;
FIG. 18 is a movement diagram III according to FIG. 15; and
FIG. 19 is a schematic diagram of an external housing encapsulating an exterior portion of a valve rod according to a preferred embodiment of the present invention

### DETAILED DESCRIPTION OF THE PREFERRED EMBODIMENTS

Other features and advantages of the present invention will become apparent from the following description of the invention which refers to the accompanying drawings.

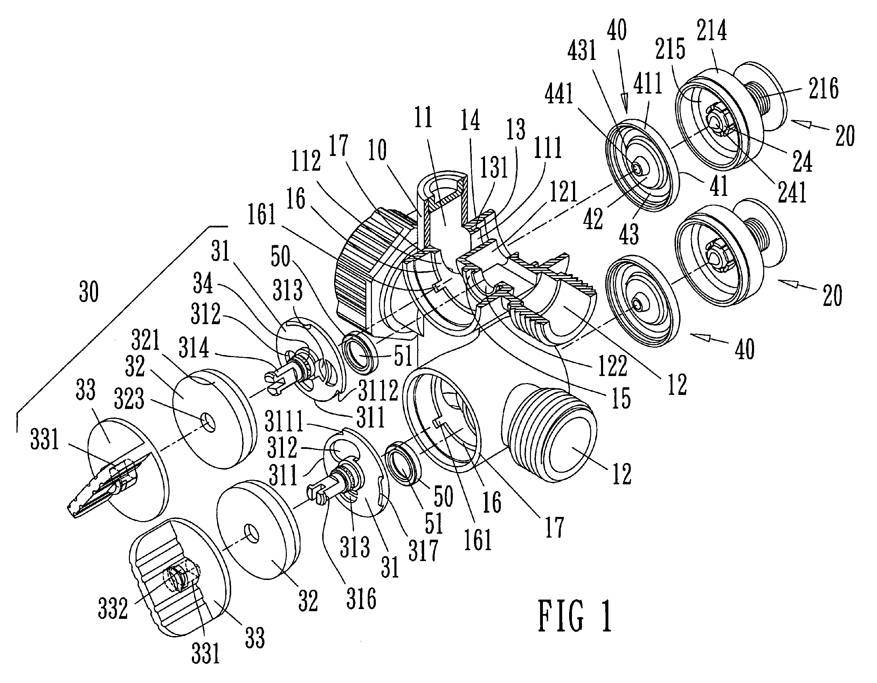

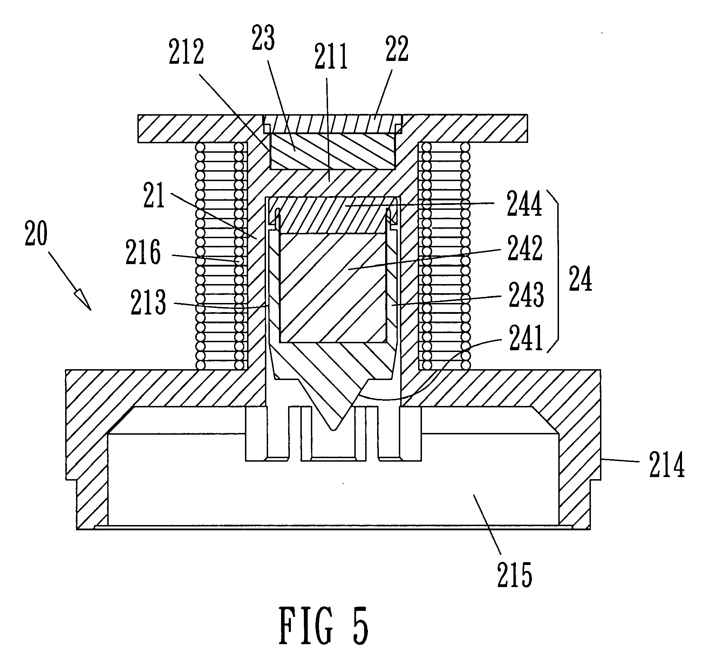

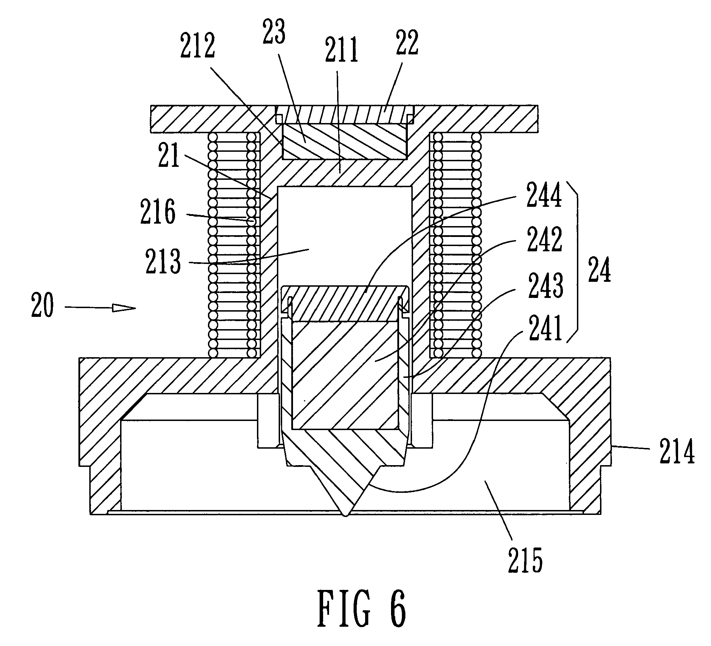

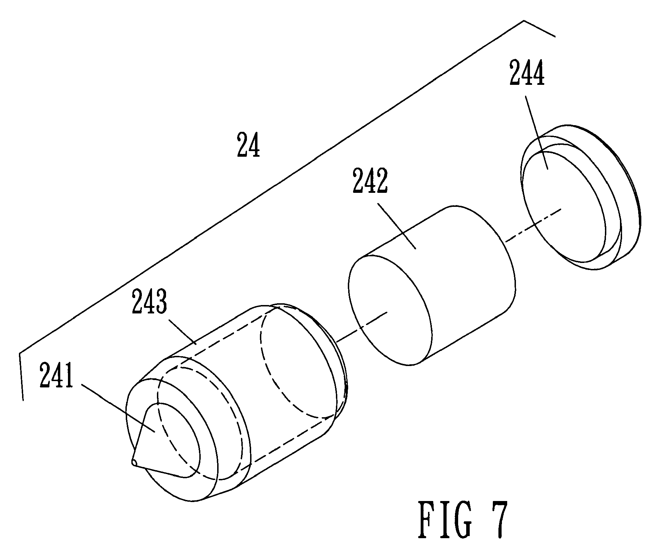

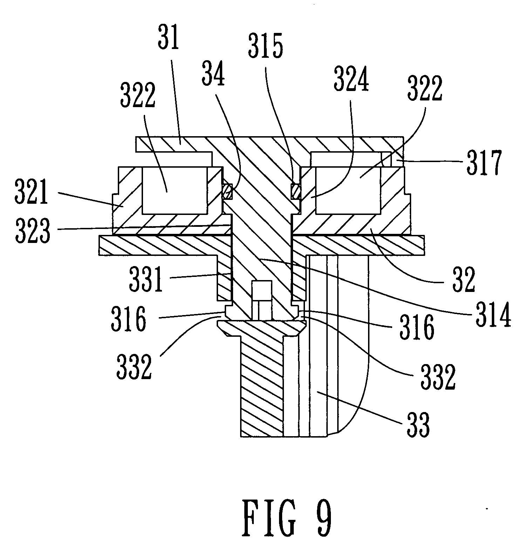

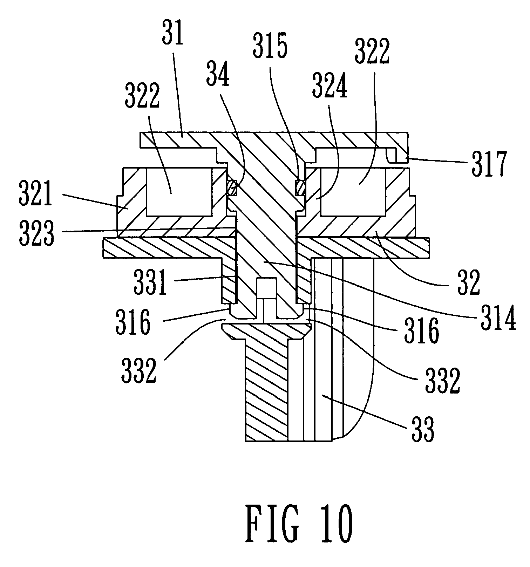

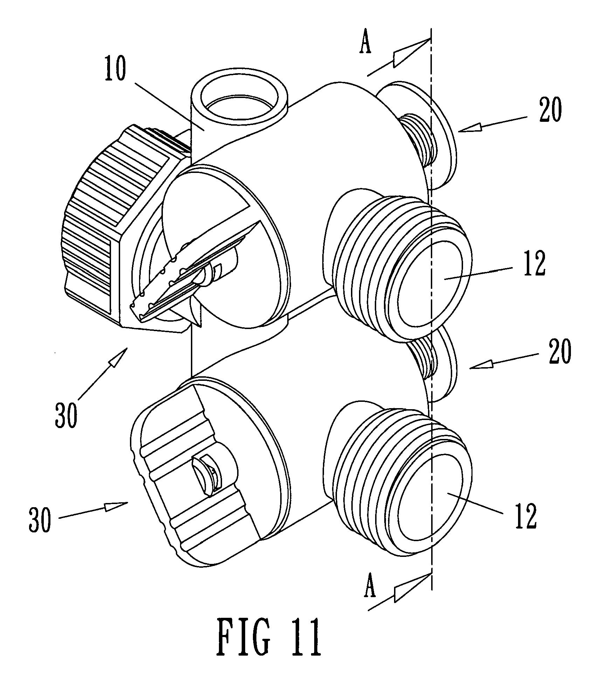

Referring FIG. 1 to FIG. 11 a structure for a control switch for a water conduit valve in accordance with a preferred embodiment of the present invention is depicted and comprises a valve body 10 having a water inflow passage 11, wherein the water inflow passage 11 is bifurcated to form more than one water outflow passage 12. In the preferred embodiment, the water inflow passage 11 is bifurcated to form two water outflow passages 12. A magnetic valve switch device 20 and a manual control switch device 30 are disposed between the water inflow passage 11 and the same water outflow passage 12 and are provided to a user to select controlling water flow that is introduced into the water outflow passage 12 from the water inflow passage 11 through the magnetic valve switch device 20 or controlling water flow that is introduced into the water outflow passage 12 through the manual control switch device 30 or controlling a maximum water flow that is introduced into water outflow passage through the magnetic valve switch device 20 and the manual control switch device 30.

The features of the structure of the invention are continuously depicted in detail by incorporating with each figure. As shown in FIG. 1, FIG. 2 and FIG. 14, a first water outlet 111 and a first water inlet 121 and a second water outlet 112 and a second water inlet 122 are respectively disposed between the water inflow passage 11 and each water outflow passage 12. The magnetic control switch device 20 is connected to the first water outlet 111 and a first water inlet 121. The manual control switch device 30 is connected to the second water outlet 112 and the second water inlet 122.

The first water outlet 111 of the valve 10 is disposed to a periphery of the first water inlet 121, and a first inner baffle ring 13 and a first circular seat 14 that is outwardly protruded are formed at a periphery of the first water outlet 111. The first inner baffle ring 13 is covered with a first rubber ring 40. The magnetic control switch device 20 is connected in the first circular seat 14. A circular concave groove 131 is disposed along the ring surface of the first inner baffle ring 13 to have a better limit effect after the corresponding end of the first rubber ring leans against the first inner baffle ring 13.

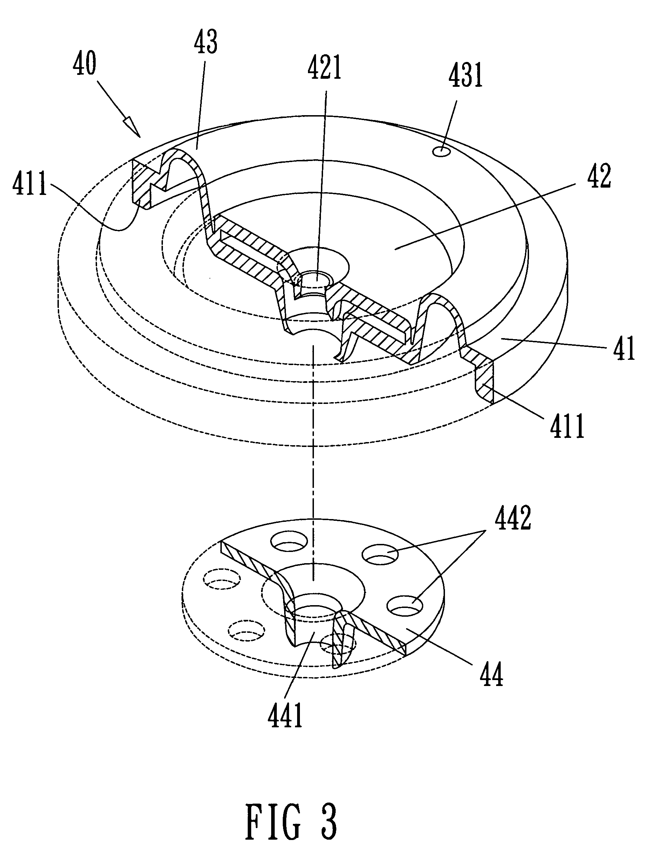

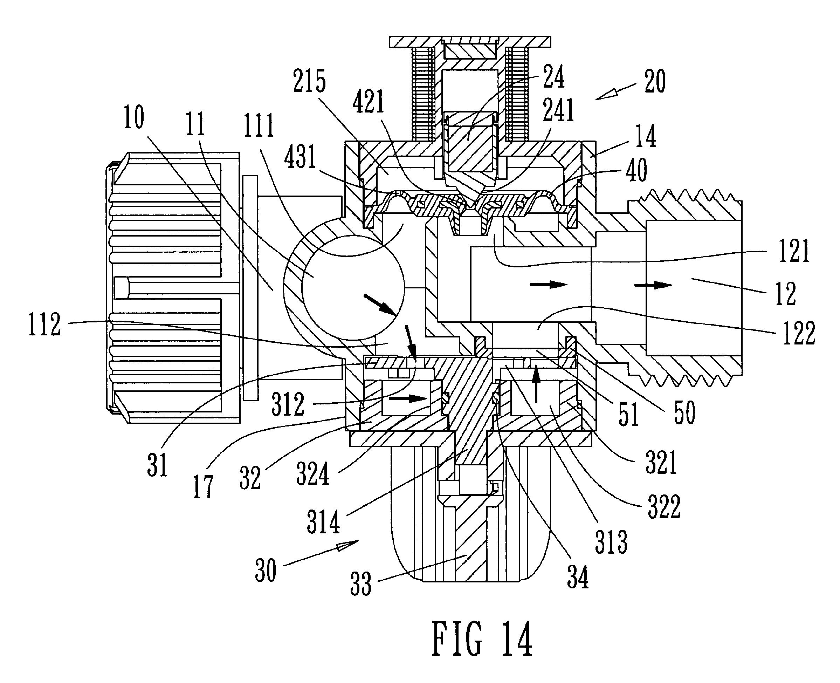

The first rubber ring 40, as shown in FIG. 3, is made of rubber material having flexibility and comprises an external circular seat 41, an inner circular seat 42, and a flexible film 32 connected between the external circular seat 41 and the inner circular seat 42. A bottom of the external circular seat 41 can be attached to the first inner baffle ring 13, and a circular protrusion portion 411 capable of being fit to the circular concave groove 131 of the first inner baffle ring 13 is extended from a periphery of the bottom of the external circular seat 41 to obtain a better positioning effect. A bottom of the inner circular seat 42 can be attached to the first water inlet 121 to completely cover the first water inlet. A first valve 421 is disposed at the axial direction of the inner circular seat 42 and can communicate with the water outflow passage 12, and a metal plate 44 is combined to the inner circular seat 42. The flexible film 32 is located at a field of the first water outlet 111 (as shown in FIG. 14), and a piercing hole 431 is disposed to a predetermined place of the flexible film 43. A hole diameter of the piercing hole 431 is smaller than an inner diameter of the first valve 421. Accordingly, the first rubber ring 40 can completely cover the first water outlet 111 and the first water inlet 121. The metal plate 44 is encapsulated inside the inner circular seat 42. The metal plate 44 is made of a metal material capable of being attracted by magnetic force. A central hole 441 is disposed to the metal plate 44 at an axial direction and can align the first valve 421 of the inner circular seat 42. In addition, a plurality of through holes 442 is distributed at a periphery of the central hole 441 so that the metal plate 44 can be firmly encapsulated inside the inner circular seat 42 to form a whole.

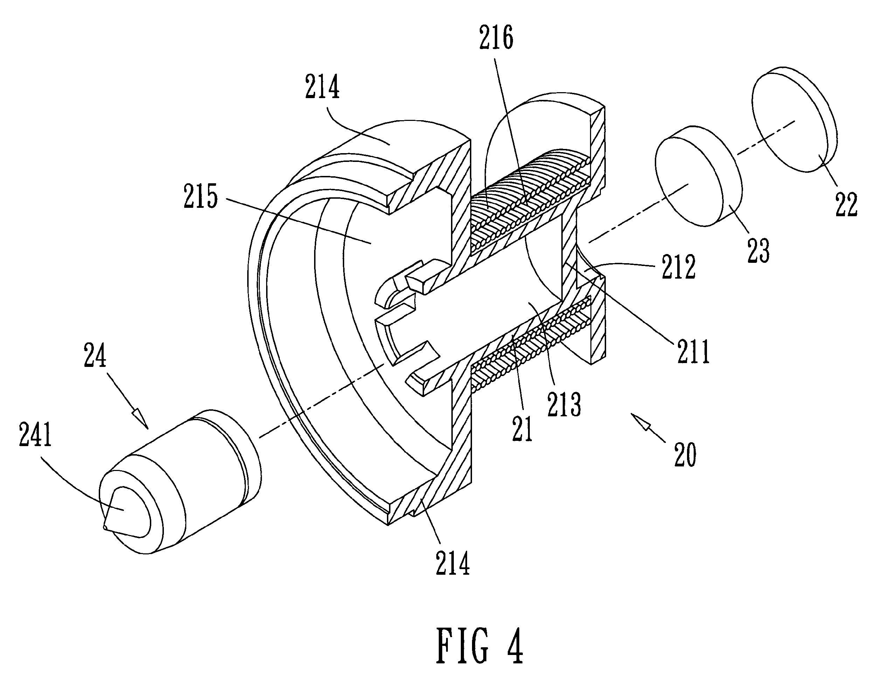

As shown in FIG. 4, FIG. 5 and FIG. 6, the magnetic control switch device 20 comprises a pipe seat 21, an upper cover 22, a magnetic attraction element 23 and a valve rod 24.

A partition 211 is disposed inside the pipe seat 21 to partition an external pipe body space 212 having an opening end and an inner pipe body space 213. An external frame 214 is extended from a bottom of the inner pipe body space 213 of the pipe seat 21. An inner containing chamber 215 communicating with the inner pipe body space 213 is formed inside the external frame 214. The bottom of the external frame 214 can closely lean against an upper end surface of the external circular seat 41 of the first rubber ring 40, and an external portion of the pipe seat 21 is wound with an electromagnetic coil 216. The covering scope of the electromagnetic coil 216 covers the inner pipe body space 213 and the external pipe body space 212. The electromagnetic coil 216 is connected to a magnetic pole switch (not shown in the figure). The inside surrounded by the electromagnetic coil 216 can be controlled by the magnetic pole switch to generate a positive magnetic field or a negative magnetic field.

The upper cover 22 can close the opening end of the external pipe body space 212. The magnetic attraction element 23 is contained inside the external pipe body space 212 and shows the immovable state and is made of a material capable of being attracted by a magnetic element.

The valve rod 24 is fit inside the inner pipe body space 213 and can be properly displaced and regulated. A valve plug 241 is disposed at a bottom of the valve rod 24 and can completely close the first valve 421 of the inner circular seat 42. The valve rod 24 can be made of a magnetic material. In the embodiment, the valve rod 24 comprises a magnetic element 242 capable of generating permanent magnetic force and a rubber sleeve pipe 243 and a sealing cap 244 for separately encapsulating external portions of the magnetic element 242. The valve plug 241 of the valve rod 24 is disposed to an external bottom of a closing end of the rubber sleeve pipe 243. An opening of the valve plug 241 is closed by the sealing cap 244. Accordingly, the magnetic element 242 may not be corroded by water.

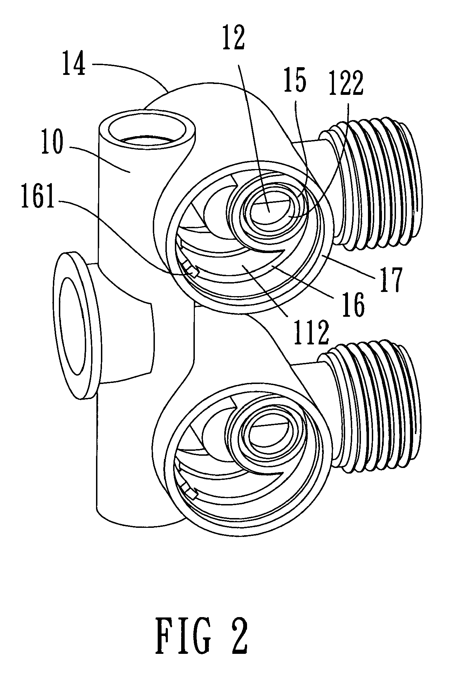

Moreover, as shown in FIG. 1 and FIG. 2, the second water outlet 112 of the valve body 10 provided in the invention is disposed to a periphery of the second water inlet 122. A concave ring 15 is disposed to an external end of the second water inlet 122. The concave ring 15 surrounds the second water inlet 122 so that a second rubber ring 50 can be installed to the concave ring 15. A second valve 51 communicating with the second water inlet 122 is disposed to the second rubber ring 50 at an axial direction. In addition, the valve body 10 has a second inner baffle ring 16 formed at a periphery of the second water outlet 112. A limit block 161 is outwardly disposed to a predetermined place of the second inner baffle ring 16. A second circular seat 17 is outwardly protruded from a periphery of the second inner baffle ring 16 so that the manual control switch device 30 is connected inside the second circular seat 17.

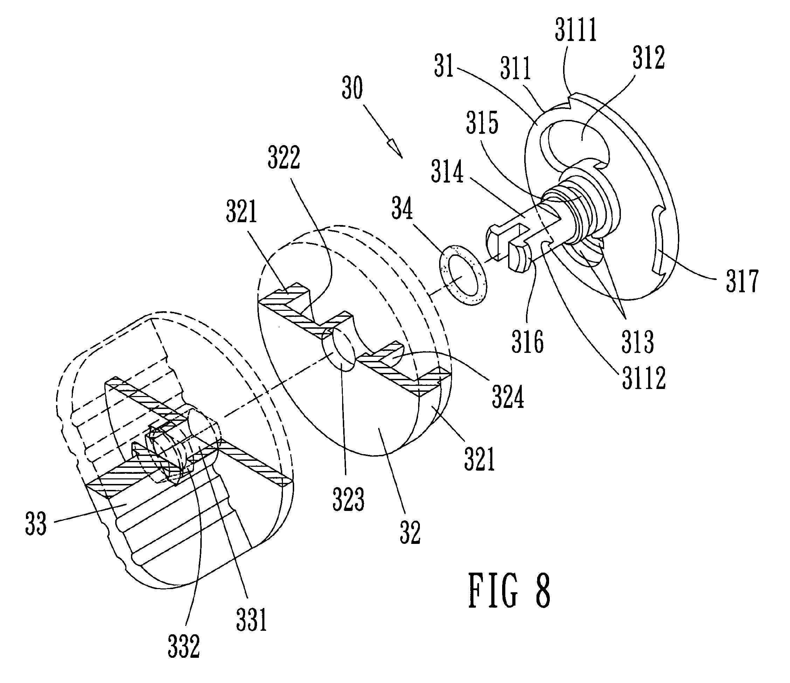

As shown in FIG. 8 to FIG. 10, the manual control switch device 30 comprises a rotary disc 31, an external cap 32 and a turning button 33.

One end of the rotary disc 31 can be attached to the corresponding end of the second inner baffle ring 16 located to the second water outlet 112 and the corresponding end of the second valve 51 of the second rubber ring 50 to close the second water outlet 112, the second water inlet 122 and the second valve 51. In addition, an inner concave arc 311 with a section is disposed along an edge at an external periphery of the rotary disc 31. A first piercing hole 312 and a second piercing hole 313 are disposed near a disc surface of the rotary disc 31. The second piercing hole 313 can be rotated and regulated to align or stagger the second valve 51 and the second water inlet 122. An axis cylinder 314 is axially disposed to the disc surface of the rotary disc 31. The axis cylinder 314 has an inner circular groove 315 near the rotary disc 31, and a water stop ring 34 is fit to the inner circular groove 315. A convex ring portion 316 is respectively formed at an external end of the axis cylinder 314. The axis cylinder 314 has a cross-section notch having a outward opening axially disposed at the convex ring portion 316 so that the convex ring portion 316 has the fine adjustment function capable of being flexibly internal-shrunk. When the axis cylinder 314 is combined to the turning button 33, the convex ring portion 316 can stop the turning button 33 to have the function of preventing the turning button 33 from being quitted. The inner concave arc 311 is provided for containing the limit block 161 disposed to the second inner baffle ring 16. A first inner side end 3111 and a second inner side end 3112 are formed at the corresponding side of the inner concave arc 311 and are provided for blocking and limiting the corresponding end surface of the limit block 161 so that the rotary disc 31 can be rotated and regulated within a predetermined angle range. Moreover, the rotary disc 31 has at least one convex seat 317 disposed toward the axis cylinder 314. The convex seat 317 in the embodiment is disposed near an external edge of the rotary disc 31 and shows a curved arc shape. The end surface of the convex seat 317 corresponding to the external cap 32 is provided for leaning and limiting the corresponding surface of the external cap 32.

The external cap 32 is provided for connecting the opening end of the second circular seat 17 of the valve body 10 and can close the opening end of the second circular seat 17. One end of the external cap 32 is provided with a circular frame 321 capable of being contained inside the second circular seat 17, and a containing chamber 322 is formed in the external cap 32. A bottom of the circular frame 321 is provided for leaning against and limiting the corresponding disc surface of the rotary disc 31. An axle hole 323 is axially disposed to the external cap 32 and passed by the axis cylinder 314. An inner frame ring 324, which corresponds to the circular frame 321, is protruded at the axle hole 323 of the external cap 32. An inner wall surface of the inner frame ring 324 can be in contact with an external ring end of the water stop ring 34 fit to the axis cylinder 314 to achieve water stop and leakage prevention functions.

An end of the turning button 33 is provided with a shape hole 331 that can be fit by an end of the axis cylinder 314 of the rotary disc 31 to generate a function of synchronous linkage. Symmetric hole 332 is preset at an end of the shape hole 331 to contain the convex ring portions 316 of the axis cylinder 314, and the axis cylinder 314 can be properly fine-adjusted and moved in the shape hole 331. After the axis cylinder 314 is fit in the shape hole 331 to achieve the positioning, the appearance shape capable of aligning the shape hole 331 is disposed at a section of the shape hole 331.

With the foregoing components, when the second piercing hole 313 is staggered the second valve 51 by manually rotating the turning button 33 to synchronously drive the rotary disc 31, the corresponding end surface of the rotary disc 31 can close the second valve 51 to show a water stop state. When the rotary disc 31 is rotated to the second piercing hole 313 to align the second valve 51, water flow can enter into the containing chamber 322 of the external cap 32 through the first piercing hole 312 from the second water outlet 112 and then is introduced into the water outflow passage 12 through the second valve 51 and the second water inlet 122 from the second piercing hole 313.

As shown in FIG. 8 to FIG. 10 and FIG. 15, after the second valve 51 of the second rubber ring 50 is closed by manually rotating the rotary disc 31, the rotary disc 31 can have a function of freely fine-adjustment due to the rotary disc 31 linked to the turning button 33. Accordingly, the rotary disc 31 can be pushed by the force of water pressure produced from water flow entering into the containing chamber 322 so that the rotary disc 31 can further lean against the second valve 51 to ensure the closing effect.

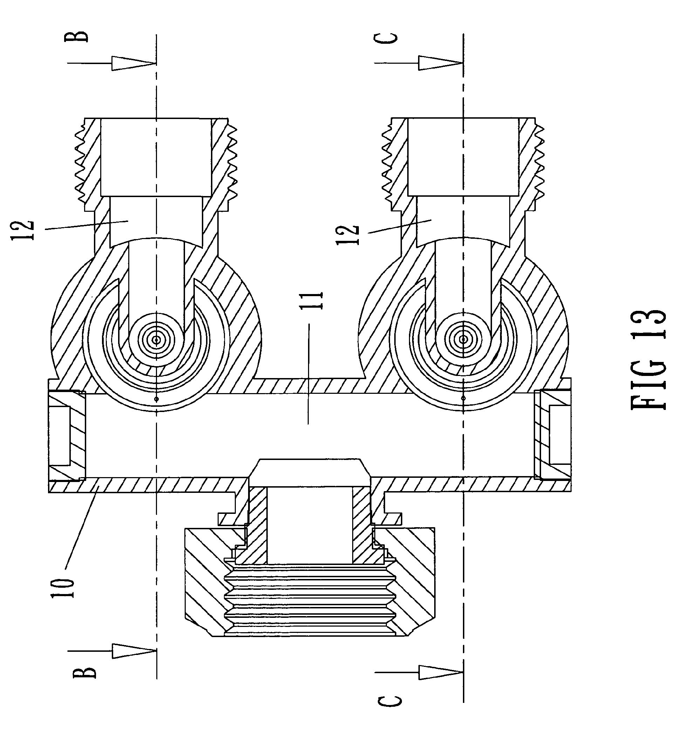

Moreover, as shown in FIG. 1 and FIG. 11 to FIG. 18, a three-dimensional drawing of an assembled switch device for water conduit valve and schematic diagrams of operating a magnetic control switch and a manual control switch device in accordance with the present invention are depicted.

Firstly, as shown in FIG. 1 and FIG. 11 to FIG. 13, the water outflow passage 12 is respectively bifurcated form an upper end and a lower end of the water inflow passage 11 of the valve body 10. The magnetic control switch device 20 disposed between the upper end of the water outflow passage 12 and the water inflow passage 11 shows a closed state while the manual control switch device 30 shows an opened state. The magnetic control switch device 20 disposed between the lower end of the water outflow passage 12 and the water inflow passage 11 shows an opened state while the manual control switch device 30 is regulated as a closed state.

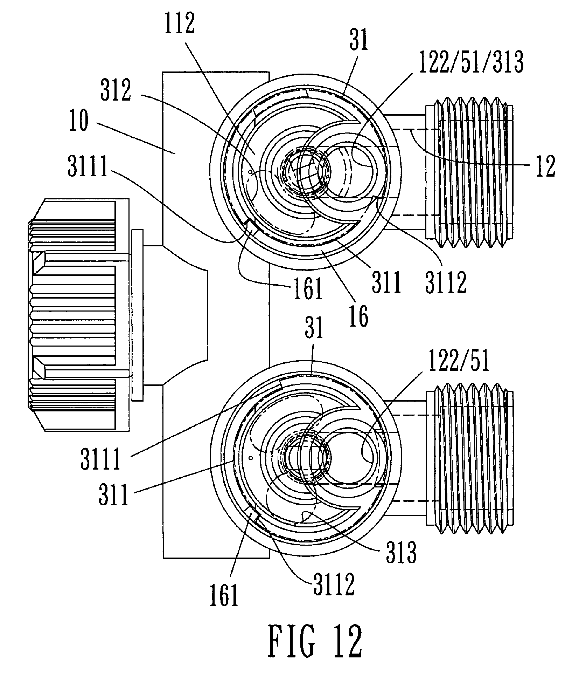

Referring to FIG. 12 and FIG. 14, when the first water outlet 111 and the first water inlet 121 are completely closed by the first rubber ring 40, the moving of the valve rod 24 of the magnetic control switch 20 is regulated to drive the valve plug 241 of the valve rod 24 to close the first valve 421 of the first rubber ring 40. Water flow is not introduced into the water outflow passage 12 through the first water inlet 121. A first inner side end 3111 of the inner concave arc 311 of the manual control switch device 30 leans against the limit block 161 by regulating the turning button 33. In the meantime, the second piercing hole 313 of the rotary disc 31 aligns the second valve 51 of the second rubber ring 50 and the second water inlet 122 to guide the maximum water flow. The first piercing hole 312 of the rotary disc 31 is at the field covered by the second water outlet 112.

Accordingly, water flow is introduced from the second water outlet 112 of the water inflow passage 11 into the containing chamber 322 inside the circular frame 321 of the external cap 32 through the first piercing hole 312 of the rotary disc 31 and then is introduced from the containing chamber 322 into the water outflow passage 12 through the second piercing hole 313, the second valve 51 and the second water inlet 122.

As shown in FIG. 12 and FIG. 15 to FIG. 18, when the turning button 33 is rotated to tow the rotary disc 31 to synchronously rotate, a second inner side end 3112 of the inner concave arc 311 keeps near the limit block 161, the intersection field between the second valve 51 and the second piercing hole 313 becomes the small from the large field to regulate water flow introduced into the second water inlet 122 from the second valve 51. When the turning button 33 is rotated to allow the second inner side end 3112 leaning against the limit block 161, the second valve 51 is staggered the second piercing hole 313 of the rotary disc 31, and the second valve 51 can be completely closed by the rotary disc 31.

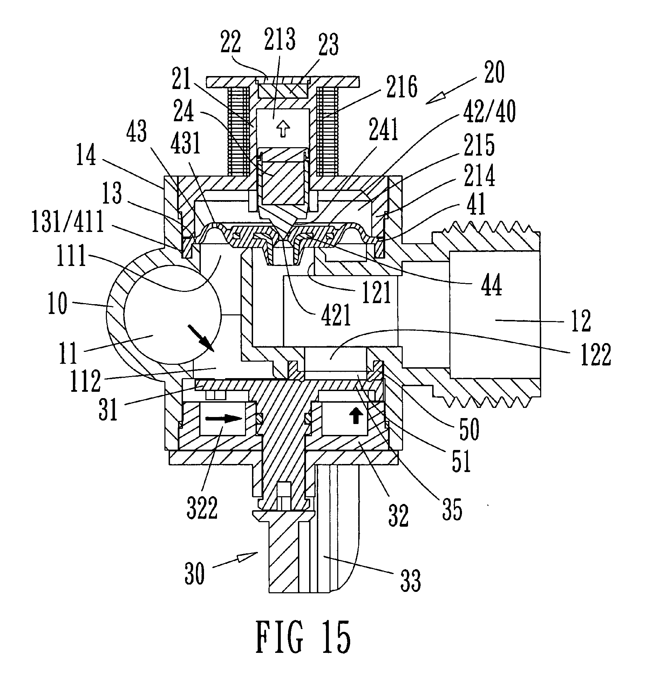

Accordingly, as shown in FIG. 15, the magnetic control switch device 20 can be controlled by a switch (not shown in the figure) connected to the electromagnetic coil 216 to generate a magnetic field mutually repulsed with the magnetic field of an end of the valve rod 24. Furthermore, when the magnetic force is larger than the magnetic force of the valve rod 24 attracted by the magnetic attraction element 23, the valve rod 24 comes off the attraction of the magnetic attraction element 23 to instantly move toward an opposite direction so that a bottom of the valve rod 24 attaches to the upper end surface of the inner circular seat 42 of the first rubber ring 40 to allow the valve plug 241 to completely close the first valve 421 of the inner circular seat 42. The valve rod 24 is magnetically attracted by the metal plate 44 inside the inner circular seat 42 to enhance the closing effect between the valve plug 241 and the first valve 421. In the meantime, water flow is continuously introduced from the first water outlet 111 of the water inflow passage 11 into the inner containing chamber 215 through the piercing hole 431 of the flexible film 43 of the first rubber ring 40 so that water quantity within the inner containing chamber 215 is gradually increased until the inner circular seat 42 is pressed to close the first water inlet 121 so as to stop water.

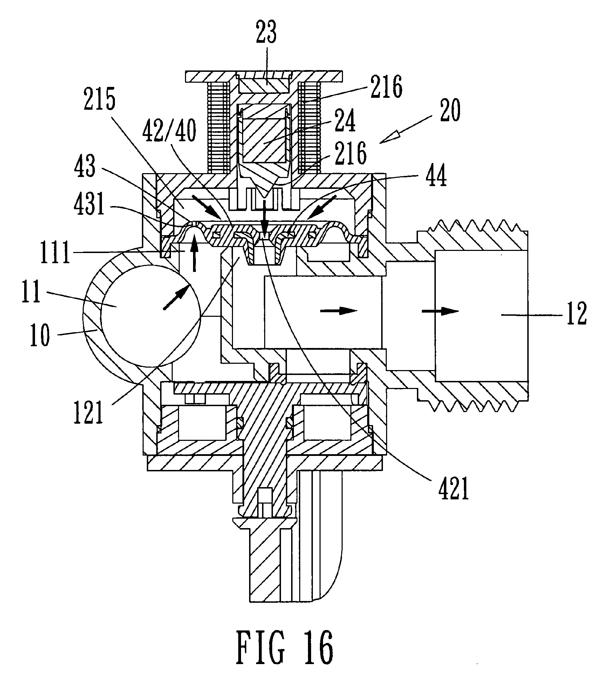

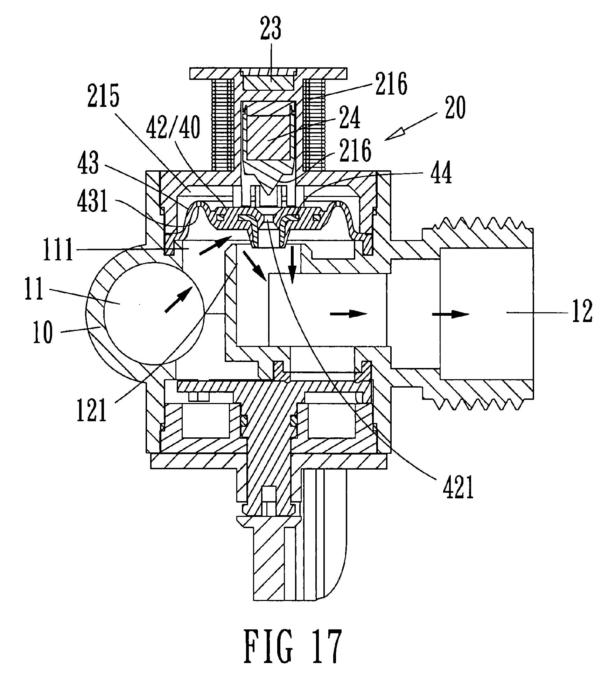

As shown in FIG. 16 and FIG. 17, when the electromagnetic coil 216 controlled by the magnetic pole switch generates a magnetic field mutually attracted with an end of the valve rod 24 and when the magnetic force of the magnetic field is larger than the magnetic force generated by the valve rod 24 that is attracted to the metal plate 44, the valve rod 24 comes off the magnetic attraction effect of the metal plate 44 to instantly move toward an opposite direction so that one end of the valve rod 24 is attracted to the magnetic attracted member 23. The valve plug 241 of the valve rod 24 then totally comes off the first valve 421 of the inner circular seat 42 to allow the first valve 421 to show an opened state. Accordingly, water flow originally staying in the inner containing chamber 215 can be continuously introduced into the first water inlet 121 through the first valve 421, thereby draining away from the water outflow passage 12.

The first valve 421 of the inner circular seat 42 shows the opened state. Since a diameter width of the first valve 421 is larger than the hole diameter of the piercing hole 431, water flow within the inner containing chamber 215 is gradually reduced due to the water quantity drained from the first valve 421 which is larger than the water quantity introduced into the inner containing chamber 215 from the piercing hole 431 of the flexible film 43. Moreover, the inner circular seat 42 can be outwardly pushed by the water flow pushing at the first water outlet 111 so that an interval between the bottom of the inner circular seat 42 and the first water inlet 121 is exposed to massively introduce the water flow into the water outflow passage 12.

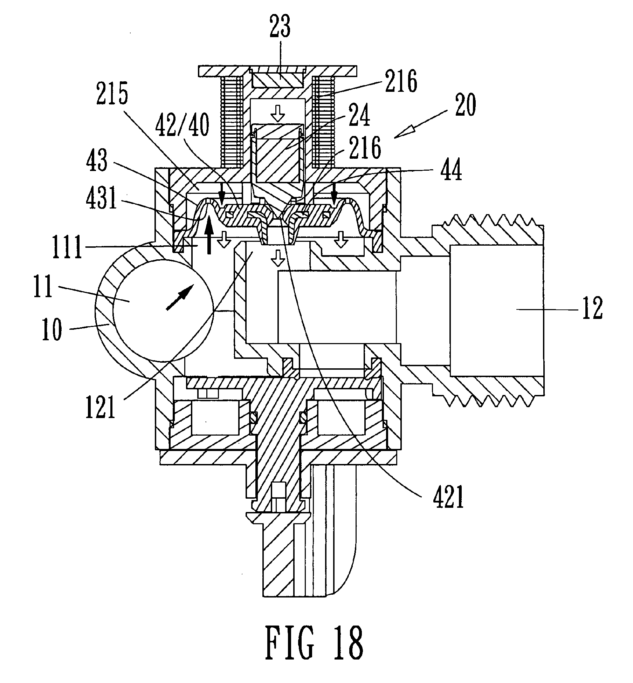

As shown in FIG. 18, when the electromagnetic coil 216 controlled by a magnetic pole switch generates a magnetic field mutually repulsed with a magnetic pole of an end of the valve rod 24 and when the magnetic force of the magnetic field is larger than the magnetic force generated by the valve rod 24 attracted by the magnetic attraction element 23, the valve rod 24 comes off the attraction of the magnetic attraction element 23 to instantly move toward an opposite direction. On the one hand the bottom of the valve rod 24 leans against the corresponding end of the inner circular seat 42, and the metal plate 44 is closely attracted by the magnetic force generated by the valve rod 24 so it allows the valve plug 24 to close the first valve 421, but on the other hand, the inner circular seat 42 is pushed by the valve rod 24 to close the first water inlet 121 to return to the close state shown in FIG. 15.

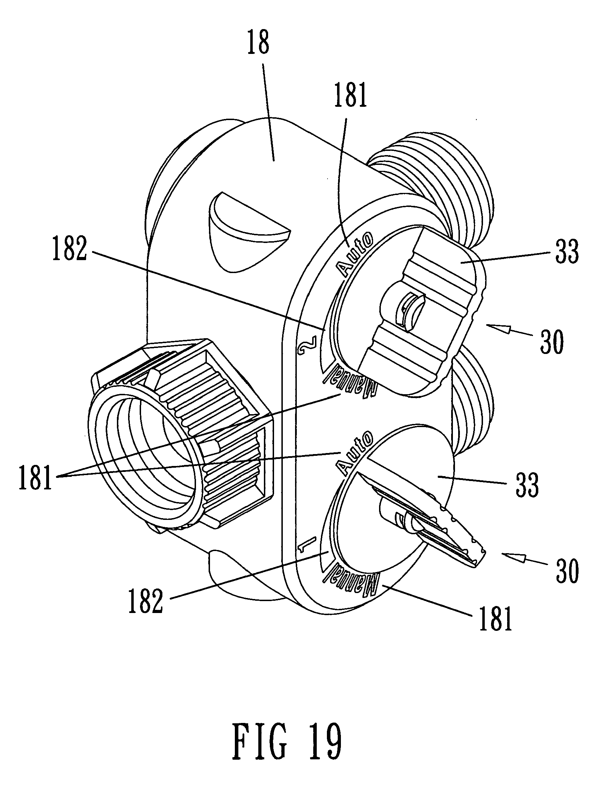

Further, as shown in FIG. 19, a schematic diagram of an external housing 18 encapsulating an exterior portion of the vale body 10 is depicted in accordance with a preferred embodiment of the present invention. The external housing 18 has text marks 181 for turn-on and turn-off and pattern marks 182 for controlling the quantity of water flow at the peripheral end surfaces of the turning buttons 33 of the manual control switch devices 30 so that an operator can exactly recognize.

Although the features and advantages of the embodiments according to the preferred invention are disclosed, it is not limited to the embodiments described above, but encompasses any and all modifications and changes within the scope of the following claims.

## Claims

1. A control switch for a water conduit valve comprising:
a valve body (10) having a water inflow passage (11), wherein the water inflow passage (11) is bifurcated to form more than one water outflow passages (12), wherein a first water outlet (111) and a first water inlet (121) on the one hand and a second water outlet (112) and a second water inlet (122) on the other hand are disposed between the water inflow passage (11) and each water outflow passage (12), **characterized in that**:
a magnetic valve switch device (20) connected to the first water outlet (111) and the first water inlet (121) and a manual control switch device (30) connected to the second water outlet (112) and the second water inlet (122) are disposed between the water inflow passage (11) and the water outflow passage (12) to provide a user to select
controlling water flow that is introduced into the water outflow passage (12) from the water inflow passage (11) through the magnetic valve switch device (20) or
controlling water flow that is introduced into the water outflow passage (12) through the manual control switch device (30) or
controlling a maximum water flow that is introduced into the water outflow passages (12) through the magnetic valve switch device (20) and the manual control switch device (30) simultaneously.

2. The control switch for water conduit valve as claimed in claim 1,
wherein the valve body (10) has a first rubber ring (40) having a first valve (421) and a magnetic control switch device (20) which are fit to the first water outlet (111) and the first water inlet (121), and a second rubber ring (50) having a second valve (51) and a manual control switch device (30) which are fit to the second water outlet (112) and the second water inlet (122).

3. The control switch for water conduit valve as claimed in claim 1,
wherein the first water outlet (111) of the valve body (10) is disposed to a periphery of the first water inlet (121), and a first inner baffle ring (13) and a first circular seat (14) that outwardly protrudes are formed at a periphery of the first water outlet (111), and the first inner baffle ring (13) is covered by the first rubber ring (40), and an inside of the first circular seat (14) is connected to the magnetic control switch device (20).

4. The control switch for water conduit valve as claimed in claim 2,
wherein the first rubber ring (40) comprises an external circular seat (41), an inner circular seat (42) and a flexible film (43) connected between the external circular seat (41) and the inner circular seat (42), and a bottom of the inner circular seat (41) completely closes the first water inlet (121) and has a first valve (421), which is axially disposed, capable of conducting the water outflow passage (12), and a metal plate (44) is combined with the inner circular seat (42), and a piercing hole (431) is disposed to the flexible film (43), and a hole diameter of the piercing hole (431) is smaller than an inner diameter of the first valve (421).

5. The control switch for water conduit valve as claimed in claim 2,
wherein the magnetic control switch device (20) comprises a pipe seat (21) having an independently external pipe body space (212) and an inner pipe body space (213), wherein the pipe seat (21) has an external frame (214) extended from a bottom of the inner pipe body space (213), and an inner containing chamber (215) is formed inside the external frame (214) to communicate with the inner pipe body space (213), and an external portion of the pipe seat (21) is wound by an electromagnetic coil (216), and the electromagnetic coil (216) is connected to a magnetic pole switch that regulates an inside of the electromagnetic coil (216) to generate a positive magnetic field or a negative magnetic field; an upper cap (22) for closing the external pipe body space (212); a magnetic attraction element (23) fits inside the external pipe body space (212); and a valve rod (24) fits inside the inner pipe body space (213), wherein a bottom of the valve rod (24) is provided with a valve plug (241) for closing the first valve (421) of the inner circular seat (42) through regulation and displacement.

6. The control switch for water conduit valve as claimed in claim 5,
wherein the valve rod (42) generates permanent magnetic force.

7. The control switch for water conduit valve as claimed in claim 5, wherein the valve rod (24) comprises a magnetic element (242) for generating permanent magnetic force and a rubber sleeve pipe (243) and a sealing cap (244) for separately encapsulating external portions of the magnetic element (242), and the valve plug (241) of the valve rod (24) is disposed to an external bottom portion of a closing end of the rubber sleeve pipe (243).

8. The control switch for water conduit valve as claimed in claim 2,
wherein the second water outlet (112) of the valve body (10) is disposed to a periphery of the second water inlet (122), and a concave ring (15) is disposed to an external end of the second water inlet (122), and a second rubber ring (50) having a second valve (51) is fit to the concave ring (15), and a second inner baffle ring (16) and a second circular seat (17) are formed at a periphery of the second water outlet (121), and a limit block (161) is disposed to a predetermined place of the second inner baffle ring (16), and the manual control switch device (30) is connected to an inside of the second circular seat (17).

9. The control switch for water conduit valve as claimed in claim 8,
wherein the manual control switch device (20) comprises a rotary disc (31), wherein one end of the rotary disc (31) leans is attached to corresponding ends of the second inner baffle ring (16) and the second vale (51) to close the second water outlet (112), the second water inlet (122) and the second valve (51), and an inner concave arc (311) is disposed to an external periphery of the rotary disc (31) to contain the limit block (161), and a first piercing hole (312) and a second piercing hole (313) are disposed to a disc surface of the rotary disc (31), and the second piercing hole (312) is rotated and regulated to align or stagger the second valve (51) and the second water inlet (112), and an axis cylinder (314) is axially disposed to the rotary disc (31), and the axis cylinder (314) has an inner circular groove (315) near the rotary disc (31), and a water stop ring (34) is fit to the inner circular groove (315), and a turning button (33) is fit at an end of the axis cylinder (314); an external cap (32) for closing the second circular seat (17), wherein one end of the external cap (32) is disposed with a circular frame (321), and a bottom of the circular frame (321) is provided for leaning against and limiting the corresponding disc surface of the rotary disc (31), and a containing chamber (322) is formed in the external cap (32), and an axle hole (323) is axially disposed to the external cap (32) and passed by the axis cylinder (314), and an inner frame ring (324) is protruded at the axle hole (323), and an inner wall surface of the inner frame ring (324) is in contact with a corresponding end of the water stop ring (34); and a turning button (33), wherein one end of the turning button (33) is provided with a shape hole (331) that is fit by an end of the axis cylinder (314) of the rotary disc (31).

10. The control switch for water conduit valve as claimed in claim 1,
wherein an external housing (18) encapsulates an exterior portion of a valve rod (24), and the external housing (18) has text marks (181) for turn-on and turn-off and pattern marks (182) for controlling a quantity of water flow at peripheral end surfaces of turning buttons (33) of the manual control switch devices (30).

## Patentansprüche

1. Kontrollschalter für ein Wasserleitungsventil, der umfasst:
einen Ventilkörper (10), der einen Wasserzuflusskanal (11) aufweist, wobei der Wasserzuflusskanal (11) verzweigt ist, um mehr als einem Wasserabflusskanal (12) zu bilden, wobei ein erster Wasserauslass (111) und ein erster Wassereinlass (121) auf der einen Seite und ein zweiter Wasserauslass (112) und ein zweiter Wassereinlass (123) auf der anderen Seite zwischen dem Wasserzuflusskanal (11) und jedem Wasserabflusskanal (12) angeordnet sind,
**dadurch gekennzeichnet, dass**
eine magnetische Ventilschaltvorrichtung (20), die mit dem ersten Wasserauslass (111) und dem ersten Wassereinlass (121) verbunden ist, und eine manuelle Kontrollschaltvorrichtung (30), die mit dem zweiten Wasserauslass (112) und dem zweiten Wassereinlass (122) verbunden ist, zwischen dem Wasserzuflusskanal (11) und dem Wasserabflusskanal (12) angeordnet sind, um für einen Benutzer die Auswahl bereitzustellen,
den Wasserfluss, der von dem Wasserzuflusskanal (11) in den Wasserabflusskanal (12) eingeleitet wird, durch die magnetische Ventilschaltvorrichtung (20) zu kontrollieren, oder
den Wasserfluss, der in den Wasserabflusskanal (12) eingeleitet wird, durch die manuelle Kontrollschaltvorrichtung (30) zu kontrollieren oder
einen maximalen Wasserfluss, der in die Wasserabflusskanäle (12) eingeleitet wird, durch die magnetische Ventilschaltvorrichtung (20) und die manuelle Kontrollschaltvorrichtung (30) gleichzeitig zu kontrollieren.

2. Kontrollschalter für ein Wasserleitungsventil nach Anspruch 1, wobei der Ventilkörper (10) einen ersten Gummiring (40), der ein erstes Ventil (421) aufweist, und eine magnetische Kontrollschaltvorrichtung (20), die an den ersten Wasserauslass (111) und den ersten Wassereinlass (121) passen, sowie einen zweiten Gummiring (50), der ein zweites Ventil (51) aufweist, und eine manuelle Kontrollschaltvorrichtung (30) aufweist, die an den zweiten Wasserauslass (112) und den zweiten Wassereinlass (21) passen.

3. Kontrollschalter für ein Wasserleitungsventil nach Anspruch 1, wobei der erste Wasserauslass (111) des Ventilkörpers (10) an einem Rand des ersten Wassereinlasses (121) angeordnet ist, wobei ein erster innerer Leitring (13) und ein erster Ringsitz (14), der nach außen hervorsteht, an einem Rand des ersten Wasserauslasses (111) ausgebildet sind und wobei der erste innere Leitring (13) durch den ersten Gummiring (40) abgedeckt ist und wobei eine Innenseite des ersten Ringsitzes (14) mit der magnetischen Kontrollschaltvorrichtung (20) verbunden ist.

4. Kontrollschalter für ein Wasserleitungsventil nach Anspruch 2, wobei der erste Gummiring (40) einen externen Ringsitz (41), einen inneren Ringsitz (42) und einen flexiblen Film (43) umfasst, der mit dem externen Ringsitz (41) und dem inneren Ringsitz (42) verbunden ist, wobei ein Boden des inneren Ringsitzes (41) den ersten Wassereinlass (121) komplett verschließt und ein erstes Ventil (421) aufweist, das axial angeordnet ist und das zum Leiten des Wasserabflusskanals (12) geeignet ist, und wobei eine Metallplatte (44) mit den inneren Ringsitz (42) kombiniert ist, und wobei eine Durchgangsöffnung (431) in dem flexiblen Film (43) angeordnet ist und wobei ein Öffnungsdurchmesser der Durchgangsöffnung (43) kleiner als ein innerer Durchmesser des ersten Ventils (421) ist.

5. Kontrollschalter für ein Wasserleitungsventil nach Anspruch 2, wobei die magnetische Kontrollschaltvorrichtung (20) einen Rohrsitz (21) umfasst, der einen unabhängigen externen Rohrkörperraum (212) und ein inneren Rohrkörperraum (213) umfasst, wobei der Rohrsitz (21) einen externen Rahmen (214) aufweist, der sich von einem Boden des inneren Rohrkörperraums (213) erstreckt, und wobei eine innere Aufnahmekammer (215) innerhalb des externen Rahmens (214) ausgebildet ist, um mit dem inneren Rohrkörperraum (213) in Verbindung zu stehen, wobei ein externer Bereich des Rohrssitzes (21) durch eine elektromagnetische Spule (216) umwickelt ist, wobei die elektromagnetische Spule (216) mit einem magnetischen Polschalter verbunden ist, der ein Inneres der elektromagnetischen Spule (216) dazu ansteuern kann, ein positives magnetisches Feld oder ein negatives magnetisches Feld zu erzeugen, sowie eine obere Kappe (22) zum Schließen des externen Rohrkörperraums (212), wobei ein magnetisches Anziehungselement (23) ins Innere des externen Rohrkörperraums (212) passt und wobei einen Ventilstab (24) in das Innere des inneren Rohrkörperraums (213) passt, wobei ein unterer Bereich des Ventilstabes (24) mit einem Ventilstöpsel (241) zum Schließen des ersten Ventils (421) des inneren Ringsitzes (42) durch Regulierung und Verschiebung bereitgestellt ist.

6. Kontrollschalter für ein Wasserleitungsventil nach Anspruch 5, wobei der Ventilstab (42) eine permanente magnetische Kraft erzeugt.

7. Kontrollschalter für ein Wasserleitungsventil nach Anspruch 5, wobei der Ventilstab (24) ein magnetisches Element (242) zum Erzeugen einer permanenten magnetischen Kraft und eine Gummirohrhülle (243) und eine Dichtkappe (244) zum separaten Einkapseln externer Bereiche des magnetischen Elements (242) umfasst, wobei der Ventilstöpsel (241) des Ventilstabs (24) an einem externen Bodenbereich eines Schließendes der Gummirohrhülle (241) angeordnet ist.

8. Kontrollschalter für ein Wasserleitungsventil nach Anspruch 2, wobei der zweite Wasserauslass (112) des Ventilkörpers (10) an einem Rand des zweiten Wassereinlasses (122) angeordnet ist, wobei ein konkaver Ring (15) an einem externen Ende des zweiten Wassereinlasses (142) angeordnet ist, wobei ein zweiter Gummiring (50), der ein zweites Ventil (51) aufweist, an den konkaven Ring (15) angepasst ist, wobei ein zweiter innerer Leitring (16) und ein zweiter Ringsitz (17) an einem Rand des zweiten Wasserauslasses (121) ausgebildet sind, wobei ein Begrenzungsblock (161) an einem vorbestimmten Ort des zweiten inneren Leitrings (16) angeordnet ist und wobei die manuelle Kontrollschaltvorrichtung (30) mit dem Inneren des zweiten Sitzes (17) verbunden ist.

9. Kontrollschalter für ein Wasserleitungsventil nach Anspruch 8, wobei die manuelle Kontrollschaltvorrichtung (20) eine Drehscheibe (31) umfasst, wobei ein Ende der Drehscheibe (31) an den korrespondierenden Enden des zweiten inneren Leitrings (16) und des zweiten Ventils (51) angebracht ist, um den zweiten Wasserauslass (112), den zweiten Wassereinlass (122) und das zweite Ventil (51) zu schließen, wobei ein innerer konkaver Bogen (311) an einem externen Rand der Drehscheibe (31) angeordnet ist, um den Begrenzungsblock (161) aufzunehmen, wobei eine erste Durchgangsöffnung (312) und eine zweite Durchgangsöffnung (313) an der Scheibenoberfläche der Drehscheibe (31) angeordnet sind, wobei die zweite Durchgangsöffnung (312) gedreht und reguliert wird, um das zweite Ventil (51) und den zweiten Wassereinlass (112) auszurichten oder zu versetzen, wobei ein Achsenzylinder (314) axial auf der Drehscheibe (31) angeordnet ist, wobei der Achsenzylinder (314) eine innere Ringnut (315) nahe der Drehscheibe (31) aufweist, wobei ein Wasserstoppring (34) an die innere Ringnut (315) angepasst ist, wobei ein Drehknopf (33) an ein Ende des Achsenzylinders (314) angepasst ist, sowie eine externe Kappe (33) zum Schließen des zweiten Ringssitzes (17), wobei ein Ende der externen Kappe (32) mit einem Ringrahmen (321) versehen ist, wobei ein unterer Bereich des Ringrahmens (321) zum Anliegen an die entsprechende Scheibenoberfläche der Drehscheibe (31) und zum Begrenzen dieser bereitgestellt ist, wobei eine Aufnahmekammer (322) in der externen Kappe (32) ausgebildet ist, wobei ein Achsloch (323) axial in der externen Kappe (32) angeordnet ist und durch den Achsenzylinder (314) durchstoßen ist, wobei ein innerer Rahmenring (324) an dem Achsloch (323) hervor steht, wobei eine innere Wandfläche des inneren Rahmenrings (324) mit einem korrespondierenden Ende des Wasserstopprings (34) in Kontakt steht; sowie einem Drehknopf (33), wobei ein Ende des Drehknopfes (33) mit einer Formöffnung (331) versehen ist, die zu einem Ende des Achsenzylinder (314) der Drehscheibe (31) passt.

10. Kontrollschalter für ein Wasserleitungsventil nach Anspruch 1, wobei ein externes Gehäuse (18) einen äußeren Bereich eines Ventilstabs (24) einschließt und wobei das externe Gehäuse (18) Textmarkierungen (181) zum An- und Abschalten und Mustermarkierungen (182) zum Kontrollieren einer Wasserdurchflussmenge an peripheren Endflächen der Drehknöpfe (33) der manuellen Kontrollschaltvorrichtung (30) aufweist.

## Revendications

1. Commutateur de commande pour une vanne de conduite d'eau comprenant :
un corps de vanne (10) ayant un passage d'afflux d'eau (11), le passage d'afflux d'eau (11) étant bifurqué pour former plus d'un passage d'écoulement d'eau (12), une première sortie d'eau (111) et une première entrée d'eau (121) d'une part et une seconde sortie d'eau (112) et une seconde entrée d'eau (122) d'autre part étant disposées entre le passage d'afflux d'eau (11) et chaque passage d'écoulement d'eau (12),
**caractérisé en ce**
**qu'**un dispositif de commutateur à vanne magnétique (20) relié à la première sortie d'eau (111) et à la première entrée d'eau (121) et un dispositif de commutateur à commande manuelle (30) relié à la seconde sortie d'eau (112) et à la seconde entrée d'eau (122) sont disposés entre le passage d'afflux d'eau (11) et le passage d'écoulement d'eau (12) pour permettre à un utilisateur de sélectionner
la commande du flux d'eau qui est introduit dans le passage d'écoulement de l'eau (12) provenant du passage d'afflux d'eau (11) traversant le dispositif de commutateur à vanne magnétique (20),
la commande du flux d'eau qui est introduit dans le passage d'écoulement de l'eau (12) provenant du passage d'afflux d'eau (11) traversant le dispositif de commutateur à commande manuelle (30) ou
la commande d'un flux d'eau maximum qui est introduit dans les passages d'écoulement de l'eau (12) traversant simultanément le dispositif de commutateur à vanne magnétique (20) et le dispositif de commutateur à commande manuelle (30).

2. Commutateur de commande pour une vanne de conduite d'eau selon la revendication 1, le corps de vanne (10) ayant un premier anneau en caoutchouc (40) ayant une première vanne (421) et un dispositif de commutateur à vanne magnétique (20) qui sont ajustés à la première sortie d'eau (111) et à la première entrée d'eau (121) et un second anneau en caoutchouc (50) ayant une seconde vanne (51) et un dispositif de commutateur à commande manuelle (30) qui sont ajustés à la seconde sortie d'eau (112) et à la seconde entrée d'eau (122).

3. Commutateur de commande pour une vanne de conduite d'eau selon la revendication 1, la première sortie d'eau (111) du corps de vanne (10) étant disposéw sur une périphérie de la première entrée d'eau (121) et un premier anneau de retenue intérieur (13) et un premier logement circulaire (14) qui fait saillie vers l'extérieur étant formés sur une périphérie de la première sortie d'eau (111) et le premier anneau de retenue intérieur (13) étant couvert par le premier anneau en caoutchouc (40) et un intérieur du premier logement circulaire (14) étant relié au dispositif de commutateur à vanne magnétique (20).

4. Commutateur de commande pour une vanne de conduite d'eau selon la revendication 2, le premier anneau en caoutchouc (40) comprenant un logement circulaire extérieur (41) et un film flexible (43) relié entre le logement circulaire extérieur (41) et le logement circulaire intérieur (42) et un fond du logement circulaire extérieur (41) fermant la première entrée d'eau (121) et ayant une première vanne (421) qui est disposée axialement, capable de conduire le passage d'écoulement d'eau (12) et une plaque de métal (44) étant combinée au logement circulaire intérieur (42) et un trou de perçage (431) étant disposé sur le film flexible (43) et un diamètre de trou du trou de perçage (431) étant plus petit qu'un diamètre intérieur de la première vanne (421).

5. Commutateur de commande pour une vanne de conduite d'eau selon la revendication 2, le dispositif de commutateur à vanne magnétique (20) comprenant un logement de tuyau (21) ayant un espace de corps de tuyau extérieur indépendamment (212) et un espace de corps de tuyau intérieur (213), le logement de tuyau (21) ayant un cadre extérieur (214) qui s'étend d'un fond de l'espace de corps de tuyau intérieur (213) et une enceinte intérieure (215) étant formée à l'intérieur du cadre extérieur (214) pour communiquer avec l'espace de corps de tuyau intérieur (213) et une portion extérieure du logement de tuyau (21) étant enroulée par une bobine électromagnétique (216) et la bobine électromagnétique (216) étant reliée à un commutateur de pôle magnétique qui règle un intérieur de la bobine électromagnétique (216) pour générer un champ magnétique positif ou un champ magnétique négatif, un capuchon supérieur (22) pour fermer l'espace de corps de tuyau extérieur (212), un élément d'attraction magnétique (23) étant ajusté à l'intérieur de l'espace de corps de tuyau extérieur (212) et une tige de vanne (24) étant ajustée à l'intérieur de l'espace de corps de tuyau intérieur (213), un fond de la tige de vanne (24) étant équipé d'un clapet de vanne (241) pour fermer la première vanne (421) du logement circulaire intérieur (42) par régulation et déplacement.

6. Commutateur de commande pour une vanne de conduite d'eau selon la revendication 5, la tige de vanne (42) générant une force magnétique permanente.

7. Commutateur de commande pour une vanne de conduite d'eau selon la revendication 5, la tige de vanne (24) comprenant un élément magnétique (242) pour générer une force magnétique permanente et un tuyau à manchon en caoutchouc (243) et un capuchon d'étanchéité (244) pour encapsuler séparément des portions extérieures de l'élément magnétique (242) et le clapet de vanne (244) de la tige de vanne (24) étant disposé sur une portion de fond extérieur d'une extrémité de fermeture du tuyau à manchon en caoutchouc (243).

8. Commutateur de commande pour une vanne de conduite d'eau selon la revendication 2, la seconde sortie d'eau (112) du corps de vanne (10) étant disposé sur une périphérie de la seconde entrée d'eau (122) et un anneau concave (15) étant disposé sur une extrémité extérieure de la seconde entrée d'eau (122) et un second anneau en caoutchouc (50) ayant une seconde vanne (51) étant adapté à l'anneau concave (15) et un second anneau de retenue intérieur (16) et un second logement circulaire (17) étant formés sur une périphérie de la seconde sortie d'eau (121) et un bloc de serrage (161) étant disposé à un endroit prédéterminé du second anneau de retenue intérieur (16) et le dispositif de commutateur à commande manuelle (30) étant relié à un intérieur du second logement circulaire (17).

9. Commutateur de commande pour une vanne de conduite d'eau selon la revendication 8, le dispositif de commutateur à vanne magnétique (20) comprenant un disque rotatif (31), une extrémité des appuis du disque rotatif (31) étant fixée aux extrémités correspondantes du second anneau de retenue intérieur (16) et de la seconde vanne (51) pour fermer la seconde sortie d'eau (112), la seconde entrée d'eau (122) et la seconde vanne (51) et un arc concave intérieur (311) étant disposé sur une périphérie extérieure du disque rotatif (31) pour contenir le bloc de serrage (161) et un premier trou de perçage (312) et un second trou de perçage (313) étant disposés sur une surface de disque du disque rotatif (31) et le second trou de perçage (312) tournant et étant régulé pour aligner ou échelonner la seconde vanne (51) et la seconde entrée d'eau et un cylindre d'axe (314) étant disposé axialement sur le disque rotatif (31) et le cylindre d'axe (314) ayant une rainure circulaire intérieure (315) près du disque rotatif (31) et une bague d'arrêt d'eau (34) étant ajustée sur la rainure circulaire intérieure (315) et un bouton tournant (33) étant ajustée à une extrémité du cylindre d'axe (314), un capuchon extérieur (32) pour fermer le second logement circulaire (17), une extrémité du capuchon extérieur (32) étant disposé avec un cadre circulaire (321) et un fond du cadre circulaire (321) étant équipé pour s'appuyer contre et limiter la surface de disque correspondante du disque rotatif (31) et une enceinte (322) étant formée dans le capuchon extérieur (32) et un trou d'axe (323) étant placé axialement sur le capuchon extérieur (32) et traversé par le cylindre d'axe (314) et un anneau de cadre intérieur (324) faisant saillie au niveau du trou d'axe (323) et une surface de paroi intérieure de l'anneau de cadre intérieur (324) étant en contact avec une extrémité correspondante de la bague d'arrêt d'eau (34) et un bouton tournant, une extrémité du bouton tournant (33) étant équipée d'un trou de forme (331) qui est ajusté par une extrémité du cylindre d'axe (314) du disque rotatif (31).

10. Commutateur de commande pour une vanne de conduite d'eau selon la revendication 1, un boîtier extérieur (18) encapsulant une portion extérieure d'une tige de soupape (24) et le boîtier extérieur (18) ayant des marques de texte (181) pour marche et arrêt et des marques de motif (182) pour commander une quantité d'écoulement d'eau sur des surfaces d'extrémité
périphériques des boutons tournants (33) des dispositifs de commutateur à commande manuelle (30).
